# EUROPÄISCHE PATENTSCHRIFT

(11) **EP 1 169 564 B1**
(45) Veröffentlichungstag und Bekanntmachung des Hinweises auf die Patenterteilung: **18.08.2004**
(21) Anmeldenummer: 01911387.7
(22) Anmeldetag: 25.01.2001
(51) Int. Cl.: F02M 25/08, G01M 3/32

(54) **VERFAHREN ZUR DICHTHEITSPRÜFUNG EINER TANKANLAGE EINES FAHRZEUGS**
METHOD FOR VERIFYING THE TIGHTNESS OF A TANK SYSTEM IN A MOTOR VEHICLE
PROCEDE DE VERIFICATION DE L'ETANCHEITE DE L'ENSEMBLE RESERVOIR D'UN VEHICULE A MOTEUR

(30) Priorität: 11.02.2000 DE 10006185
(43) Veröffentlichungstag der Anmeldung: 09.01.2002
(73) Patentinhaber: ROBERT BOSCH GMBH, 70442 Stuttgart (DE)
(72) Erfinder: STREIB, Martin, 71665 Vaihingen (DE)
(86) Internationale Anmeldenummer: PCT/DE2001/000287
(87) Internationale Veröffentlichungsnummer: WO 2001/059286

(56) Entgegenhaltungen:
- FR-A- 2 781 881
- PATENT ABSTRACTS OF JAPAN vol. 2000, no. 02, 29. Februar 2000 (2000-02-29) & JP 11 326110 A (UNISIA JECS CORP), 26. November 1999 (1999-11-26) & US 6 119 633 A (UNISIA JECS CORP) 19. August 2000 (2000-08-19)
- PATENT ABSTRACTS OF JAPAN vol. 2000, no. 03, 30. März 2000 (2000-03-30) & JP 11 343926 A (UNISIA JECS CORP), 14. Dezember 1999 (1999-12-14) & US 6 119 663 A (UNISIA JECS CORP) 19. August 2000 (2000-08-19)

## Beschreibung

### Stand der Technik

Die Erfindung betrifft ein Verfahren zur Dichtheitsprüfung einer Tankanlage, insbesondere einer Tankentlüftungsanlage, nach dem Oberbegriff des Anspruchs 1.

Ein Verfahren zur Dichtheitsprüfung einer Tankentlüftungsanlage eines Fahrzeugs geht beispielsweise aus der DE 198 09 384 Al sowie aus der DE 196 36 431 Al hervor.

Hierbei wird mittels einer Druckquelle ein Überdruck in die Tankentlüftungsanlage eingebracht und der zeitliche Verlauf wenigstens einer Betriebskenngröße der Druckquelle beim Einbringen des Überdrucks erfasst, mit einem im Falle eines dichten Tanksystems erwarteten, beispielsweise zuvor gemessenen, berechneten oder geschätzten zeitlichen Verlauf der Betriebskenngröße (Diagnoseverlauf) verglichen und auf eine Undichtigkeit geschlossen, wenn der erfasste zeitliche Verlauf um wenigstens einen vorgebbaren Wert von dem Diagnoseverlauf abweicht. Als Diagnoseverlauf wird beispielsweise der Pumpenstrom einer Pumpe verwendet. Der Diagnoseverlauf entspricht dabei dem Pumpenstrom, der entsteht, wenn Überdruck in eine Tankentlüftungsanlage mit einem vorgegebenen Referenzleck, z. B. mit einem Druchmesser von 0,5mm, eingebracht wird. In diesem Falle wird der Strom der Pumpe beim Einbringen des Überdrucks mit einem Referenstrom verglichen. Das absolute Stromniveau kann nun aufgrund von Umweltbedingungen und Toleranzen bei gleicher Leckgröße stark variieren. Unabhängig vom absoluten Niveau kann dabei jedoch ein Feinleck mit einem Durchmesser von 0,5mm ausgeschlossen werden, wenn beim Einbringen des Überdrucks durch Pumpen ein Stromniveau erreicht wird, das größer ist als der Referenzstrom. Wird dieses Stromniveau nicht erreicht, kann auf ein Feinleck mit einem Durchmesser von ≥ 0,5mm geschlossen werden.

Ein Grobleck mit einem Durchmesser von 1mm oder mehr kann dagegen bei aus dem Stand der Technik bekannten Verfahren zur Dichtheitsprüfung von Tankentlüftungsanlagen nicht erfasst werden. Beim Pumpen gegen ein Referenzleck kann nun abhängig von Umweltbedingungen und Bauteiletoleranzen bei Vorliegen eines Lecks mit einem Durchmesser von etwa 1mm nach einer gewissen vorgebbaren Zeit ein praktisch beliebiges Stromniveau erreicht werden. Eine sichere Entscheidung, ob ein Grobleck mit einem Durchmesser von 1mm oder mehr vorliegt oder nicht, ist auf diese Weise daher nicht möglich.

So ist es beispielsweise denkbar, dass ein vorgegebener Pumpstrom bereits bei einem Leck mit einem Durchmesser von nur 0,4mm, für das keine Fehlerausgabe erforderlich ist, nach einer vorgegebenen Zeit noch nicht erreicht wird, so dass bei den aus dem Stand der Technik bekannten Verfahren ein Fehler ausgegeben würde.

Umgekehrt könnte bei anderen Toleranzen auch bei einem Leck mit einem Durchmesser von mehr als 1mm eine vorgegebene Stromschwelle in einem Zeitintervall erreicht werden, das kleiner ist als ein vorgegebenes Diagnose-Zeitintervall, was dazu führen würde, dass eine Fehlerausgabe nicht erfolgen würde.

Aufgabe der Erfindung ist es daher, ein Verfahren zur Dichtheitsprüfung einer Tankanlage eines Fahrzeugs dahingehend weiterzubilden, dass eine sichere Erkennung von Groblecks mit einem Durchmesser von ≥ 1mm unabhängig von toleranz- und/oder umweltbedingten Störungen der Betriebskenngröße beim Einbringen eines Überdrucks in die Tankanlage möglich ist.

### Vorteile der Erfindung

Diese Aufgabe wird bei einem Verfahren zur Dichtheitsprüfung einer Tankanlage der eingangs beschriebenen Art erfindungsgemäß durch die Merkmale des Anspruchs 1 gelöst. vorteilhafte Weiterbildungen der Erfindung sind Gegenstand der Unteransprüche.

Der Vorteil des erfindungsgemäßen Verfahrens liegt darin, dass durch weiteren Diagnoseverlauf, das heisst das weitere Einbringen eines Überdrucks oder Unterdrucks in die Tankanlage, durch das Erfassen der Betriebskenngröße der Druckquelle beim Einbringen dieses weiteren Überdrucks oder Unterdrucks bis zum Erreichen eines zweiten Zeitpunkts oder eines zweiten Druckniveaus und durch den Vergleich der so erfassten Betriebskenngröße mit einem im Falle eines dichten Tanksystems erwarteten zeitlichen Verlauf der Betriebskenngröße beim Einbringen des weiteren Überdrucks sowie durch die Ausgabe einer Fehlermeldung erst dann, wenn sowohl eine Abweichung der erfassten Betriebskenngröße von dem Diagnoseverlauf als auch eine Abweichung der Betriebskenngröße von dem weiteren Diagnoseverlauf um jeweils wenigstens einen vorgegebenen Wert festgestellt wird, gewissermaßen eine Verifizierung oder Falsifizierung einer zunächst erwarteten Undichtigkeit möglich wird. Durch diese Verifizierung oder Falsifizierung können insbesondere aufgrund von Umgebungseinflüssen oder Bauteiletoleranzen hervorgerufene Fehler eliminiert werden.

Durch das erfindungsgemäße Verfahren können daher sehr präzise Groblecks mit einem Durchmesser von 1 mm oder mehr als 1 mm erkannt werden. Dagegen führen Lecks mit einem Durchmesser von weniger als 1 mm nicht zu Fehlermeldungen.

Als zu erfassende Betriebskenngröße der Druckquelle wird vorteilhafterweise der elektrische Strom einer Überdruckpumpe/Unterdruckpumpe erfasst. Hierdurch ist es nicht nur möglich, signifikante Änderungen des Betriebszustands der Druckquelle präzise zu erfassen, der erfasste elektrische Strom kann auch auf vorteilhafte Weise direkt in Auswerteschaltungen oder dgl. weiterverarbeitet werden.

Was den zeitlichen Verlauf der Betriebskenngröße, d.h. des elektrischen Stroms betrifft, so könnte rein prinzipiell der Strom kontinuierlich über die Zeit erfasst und der so dargestellte funktionale Verlauf mit einem zuvor gemessenen, berechneten oder geschätzten zeitlichen Verlauf verglichen werden.

Eine besonders vorteilhafte Ausführungsform sieht vor, dass man den Pumpenstrom nach Ablauf vorgegebener Zeitintervalle mit erwarteten Stromwerten bei einem dichten Tanksystem vergleicht und eine Fehlermeldung nur dann herausgibt, wenn der erfasste Pumpenstrom sowohl nach Ablauf des ersten Zeitintervalls von einem erwarteten Stromwert bei einem dichten Tanksystem als auch bei Ablauf des zweiten Zeitintervalls von einem zweiten erwarteten Stromwert bei einem dichten Tanksystem abweicht.

Auch durch Vergleich mit diesen Werten ist eine sehr präzise Leckerkennung einer Tankentlüftungsanlage möglich, wobei im Vergleich mit der Erfassung des zeitlichen Verlaufs der Stromstärke ein wesentlich reduzierter Speicheraufwand erforderlich ist.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: schematisch eine aus dem Stand der Technik bekannte Tankentlüftungsanlage eines Fahrzeugs, bei welcher das von der Erfindung Gebrauch machende Verfahren zur Anwendung kommt;
- Fig. 2: schematisch den zeitlichen Verlauf des Pumpenstroms einer Pumpe zum Einbringen eines Überdrucks in eine Tankentlüftungsanlage eines Fahrzeugs und
- Fig. 3: schematisch ein Flussdiagramm eines Ausführungsbeispiels eines von der Erfindung Gebrauch machenden Verfahrens zur Prüfung der Dichtigkeit einer Tankentlüftungsanlage eines Fahrzeugs.

### Beschreibung eines Ausführungsbeispiels

Die Erfindung wird im Folgenden am Beispiel einer Tankentlüftungsanlage eines Kraftfahrzeugs beschrieben. Es versteht sich aber, dass das erfindungsgemäße Verfahren nicht nur bei einer Tankentlüftungsanlage, sondern bei beliebigen Tankanlagen zum Einsatz kommen kann.

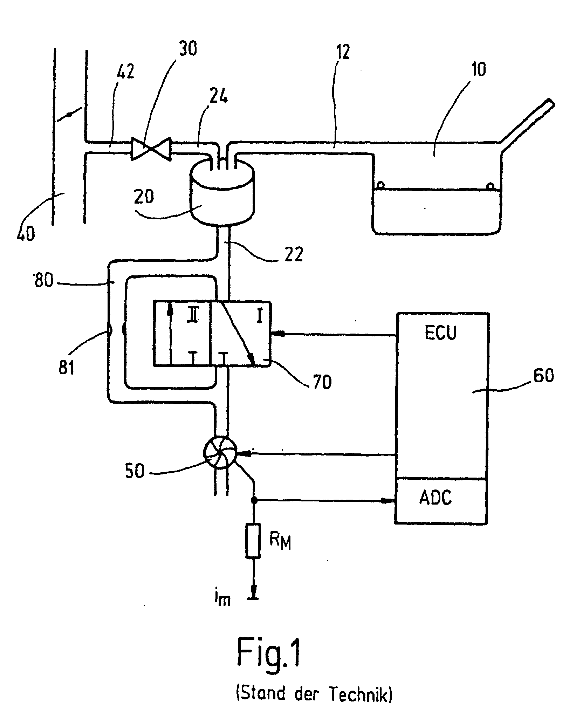

Eine Tankentlüftungsanlage eines Kraftfahrzeugtanksystems, dargestellt in Fig. 1, umfasst einen Tank 10, ein Adsorptionsfilter 20, beispielsweise ein Aktivkohlefilter, das mit dem Tank 10 über eine Tankanschlussleitung 12 verbunden ist und eine mit der Umgebung verbindbare Belüftungsleitung 22 aufweist, sowie ein Tankentlüftungsventil 30, das einerseits mit dem Adsorptionsfilter 20 über eine Ventilleitung 24 und andererseits mit einem Saugrohr 40 einer (nicht dargestellten) Brennkraftmaschine über eine Ventilleitung 42 verbunden ist.

Durch Verdunstung entstehen in dem Tank 10 Kohlenwasserstoffe, die sich in dem Adsorptionsfilter 20 anlagern. Zur Regenerierung des Adsorptionsfilters 20 wird das Tankentlüftungsventil 30 geöffnet, so dass aufgrund des in dem Saugrohr 40 herrschenden Unterdrucks Luft der Atmosphäre durch das Adsorptionsfilter 20 gesaugt wird, wodurch die in dem Adsorptionsfilter 20 angeLagerten Kohlenwasserstoffe in das Saugrohr 40 gesaugt und der Brennkraftmaschine zugeführt werden.

Um die Funktionsfähigkeit der Tankentlüftungsanlage zu prüfen, ist eine Pumpe 50 vorgesehen, die mit einer Schaltungseinheit 60 verbunden ist. Der Pumpe 50 nachgeschaltet ist ein Umschaltventil 70, beispielsweise in Form eines 3/2-Wegeventils. Parallel zu diesem Umschaltventil 70 ist in einem separaten Zweig 80 ein Referenzleck 81 angeordnet. Die Größe des Referenzlecks 81 ist so gewählt, dass sie der Größe des zu erfassenden Lecks entspricht. Die Größe kann beispielsweise so gewählt werden, dass sie einem Referenzleck mit einem Durchmesser von 0,5mm entspricht.

Es versteht sich, dass das Referenzleck 81 beispielsweise auch Bestandteil des Umschaltventils 70 sein kann, etwa durch eine Kanalverengung oder dgl., so dass in diesem Falle ein zusätzlicher Referenzteil entfallen kann (nicht dargestellt).

Die Dichtheitsprüfung der Tankentlüftungsanlage ist beispielsweise aus der DE 196 36 431 Al oder auch in der DE 198 09 384 Al, auf die vorliegend voll inhaltlich Bezug genommen wird, ausführlich beschrieben. Es wird hierbei durch Erfassung des dem Pumpenmotor zuzuführenden Stroms festgestellt, ob der durch die Druckquelle in Form der Pumpe 50 in die Tankentlüftungsanlage einzubringende Förderstrom von einem Förderstrom abweicht, der bei Einbringen eines Überdrucks über das Referenzleck vorhanden ist. Hierzu wird der zeitliche Verlauf des Stroms, der sich ergibt, wenn eine Spannung an die Pumpe 50 angelegt wird, erfasst. Es ist zu bemerken, dass die Erfindung nicht auf das Einbringen eines Überdrucks beschränkt ist, vielmehr kann die Dichtheitsprüfung ebenso durch Einbringen eines Unterdrucks vorgenommen werden. In beiden Fällen können eventuell vorhandene Lecks festgestellt werden.

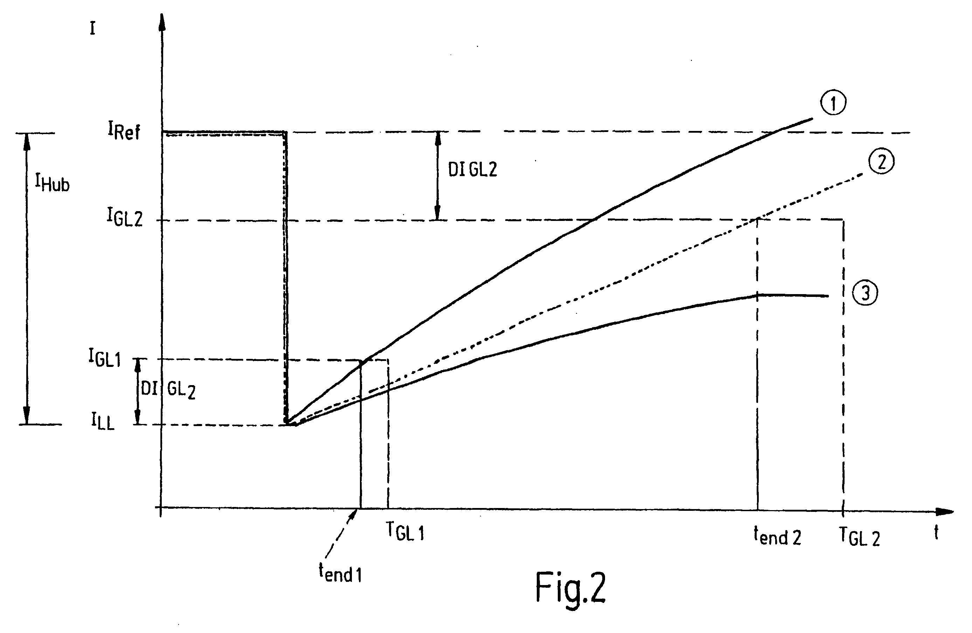

Das Verfahren zur Dichtheitsprüfung wird nachfolgend in Verbindung mit Fig. 2, in der der Pumpenstrom über der Zeit schematisch dargestellt ist, und Fig., 3, welche ein Flussdiagramm des Verfahrens schematisch zeigt, näher erläutert.

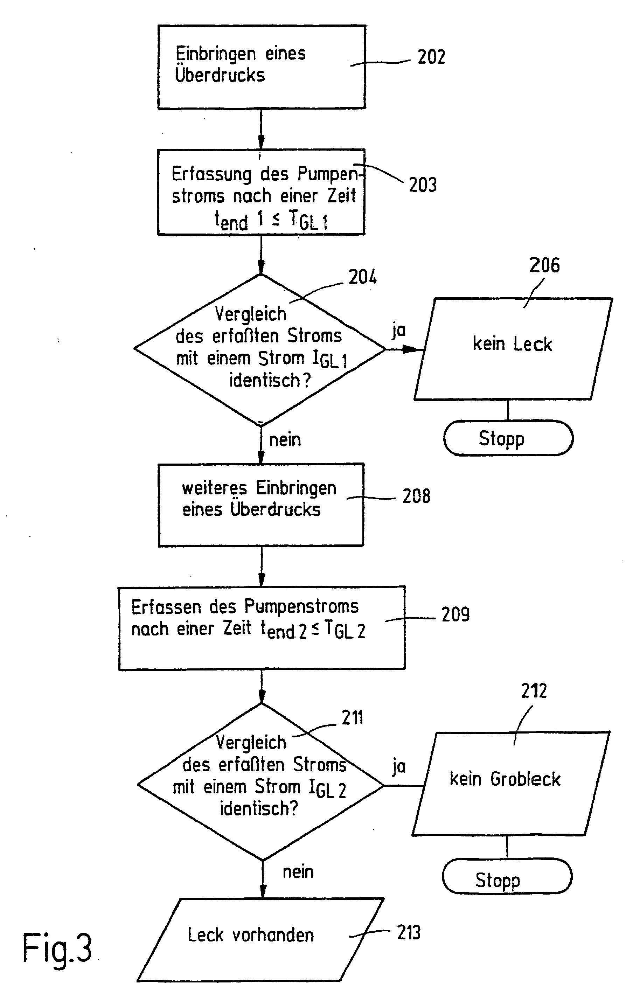

Zunächst wird in einem Schritt 202 (Fig. 3) ein Überdruck in die Tankentlüftungsanlage eingebracht. Dabei wird der zeitliche Pumpenstrom erfasst. Wie in Fig. 2 dargestellt ist, wird die Pumpe 50 zunächst mit einem Referenzstrom I_{Ref} beaufschlagt, wobei sich das Umschaltventil 70 in diesem Zustand in der in Fig. 1 mit I gekennzeichneten Stellung befindet. Bei dieser Stellung des Umschaltventils 70 wird ein Förderstrom durch die Pumpe oder Druckquelle 50 über das Referenzleck 80 in die Tankentlüftungsanlage eingebracht. Dabei stellt sich der zeitlich im wesentlichen konstante Strom I_{Ref} ein, wie es in Fig. 2 schematisch dargestellt ist. Sobald das Umschaltventil 70 von der Stellung I in die Stellung II umgeschaltet wird, beaufschlagt die Druckquelle oder Pumpe 50 die Tankentlüftungsanlage mit einem Überdruck (Schritt 202). Beim Umschalten nimmt zunächst der Motorstrom um einen Wert I_{Hub} schnell ab und anschließend mit zunehmender Zeit kontinuierlich zu. Wenn nun der erfasste Pumpenstrom nach einer Zeit t_{end1} (Schritt 203), die kleiner ist als eine vorgebbare Zeit T_{GL1} ein Stromniveau I_{GL1} erreicht, der um eine Differenz DIGL2 von einem Leerlaufstrom I_{LL} der Pumpe abweicht (Fig. 2), wenn mit anderen Worten der Pumpenstrom in einer zeit t = t_{end1}, die kleiner ist als eine vorgegebene Zeit T_{GL1}, ein Stromniveau I_{GL1} erreicht, welches um eine vorgegebene Schwelle DIGL2 den Leerlaufstrom I_{LL} übersteigt, ist davon auszugehen, dass kein Leck vorliegt. In diesem Falle kann beispielsweise wie in Fig. 3 schematisch dargestellt nach Ausgabe einer Meldung "kein Leck" in Schritt 206 die Dichtheitsprüfung beendet werden. Dieser Fall ist in Fig. 2 anhand der mit 1 gekennzeichneten Kurve schematisch dargestellt, wobei die Fortsetzung der Kurve I für eine Zeit t > t_{end1} den Stromverlauf darstellt, der sich ergeben würde, wenn weiter gepumpt würde. Wie oben dargestellt, wird die Diagnose jedoch abgebrochen, wenn der erfasste Strom dem Strom I_{GL1} entspricht, was in Schritt 204 festgestellt wird.

Entspricht jedoch der erfasste Strom nicht dem vorgegebenen Wert I_{GL1}, könnte ein Leck vorliegen, es könnte aber auch eine Verfälschung des Ergebnisses aufgrund von Umweltbedingungen und/oder Toleranzen vorliegen, die zu einer starken Variation des erfassten Stroms führen kann. So ist es beispielsweise denkbar, dass der Strom I_{GL1}, bereits bei einem Leck von nur 0,4mm, bei dem kein Fehler angezeigt werden muss, nach der Zeit t_{GL1} noch nicht erreicht wird, so dass fälschlicherweise eine Fehlermeldung ausgegeben und gespeichert würde. Ein solcher Fall ist schematisch in Fig. 2 anhand des mit 2 gekennzeichneten Strom-Zeit-Verlaufs dargestellt.

Umgekehrt könnte die Schwelle T_{GL1} beispielsweise bei anderen Toleranzen auch bei einem Leck mit einem Durchmesser von größer als 1mm in einer Zeit t < T_{GL1} erreicht werden, wodurch ein Leck, welches angezeigt werden muss, nicht erkannt würde.

Um derartige Fehler auszuschließen, wird wie in Verbindung mit dem in Fig. 2 mit 2 gekennzeichneten Strom-Zeit-Verlauf dargestellt ist, statt einer sofortigen Fehlermeldung und eines Fehlereintrags in einem Speicher die Dichtheitsprüfung fortgesetzt bis zu einer Maximalzeit T_{GL2} >> T_{GL1}. Wird nun nach einer Zeit t < T_{GL2} ein Niveau I_{GL2} erreicht, zum Beispiel bei einer Zeit t = t_{end2}, so kann davon ausgegangen werden, dass kein Leck mit einem Durchmesser ≥ 1mm vorliegt. Der ursprüngliche "Grobleckverdacht" in Schritt 204 bestätigt sich also in diesem Falle nicht, sondern war nur toleranz- und/oder umweltbedingt. Diese Prüfung findet statt in den Schritten 209, 211 (Fig. 3). Es wird in diesem Falle in Schritt 212 angezeigt, dass kein Grobleck vorliegt und die Dichtheitsprüfung bei t_{end2} abgebrochen. (Die Fortsetzung der mit 2 gekennzeichneten Kurve über t_{end2} hinaus zeigt nur den theoretischen weiteren Verlauf des Stromes für den Fall, dass weiter gepumpt würde).

Wenn sich dagegen ein Strom-Zeit-Verlauf einstellt, wie er schematisch in Fig. 2 durch die mit 3 gekennzeichneten Kurve dargestellt ist, bei dem auch nach der Zeit T_{GL2} das Niveau I_{GL2} noch nicht erreicht wird, so steht bei entsprechender Applikation der Schwelle I_{GL2} sicher fest, dass ein Leck vorliegt, das zumindest nicht wesentlich kleiner als ein Leck mit einem Durchmesser von 1 mm ist. Aufgrund des höheren Stromniveaus näher am Referenzstrom I_{Ref} spielen in diesem Falle Toleranzen eine wesentlich geringere Rolle. Der zur Zeit t = T_{Gl1} gesetzte "Anfangsverdacht" (vgl. Schritt 204) wird in diesem Falle bestätigt und in Schritt 213 ein Fehler ausgegeben und in einem Speicher eingetragen.

Die Applikationen der Stromschwellen I_{GL1}, I_{GL2} erfolgt beispielsweise durch frühere Messungen, Rechnungen oder Schätzungen.

Die Stromschwelle I_{Gl2} wird beispielsweise bestimmt als die Differenz von Referenzstrom I_{Ref} und einem Wert DIGL2, wobei der Wert DIGL2 eine Funktion von I_{Ref} - I_{LL} ist. Äquivalent hierzu dann I_{GL2} auch als Summe von I_{LL} und DIGL2* bestimmt werden, wobei in diesem Falle DIGL2* ebenfalls als eine Funktion von I_{Ref} - I_{LL} ist.

Der Vorteil des vorbeschriebenen Verfahrens besteht darin, dass ein Leck auch unabhängig von Umweltbedingungen oder Modultoleranzen sehr präzise erfasst werden kann. Es kann gewissermaßen ein "Anfangsverdacht" auf ein Leck durch weiteres Einbringen eines Überdrucks in die Tankentlüftungsanlage bestätigt oder verworfen werden.

Das obenbeschriebene Verfahren wurde in Verbindung mit der Erfassung von Stromwerten erläutert. Es ist darauf hinzuweisen, dass das Verfahren keinesfalls auf die Erfassung von Stromwerten beschränkt ist, vielmehr kann jede beliebige Betriebskenngröße der Pumpe, insbesondere auch der von der Pumpe erzeugte Druck, für die Erfassung von Lecks in einer Tankanlage in Betracht kommen. Das vorbeschriebene Verfahren stellt insoweit lediglich ein besonders vorteilhaftes Ausführungsbeispiel dar.

## Patentansprüche

1. Verfahren zur Dichtheitsprüfung einer Tankanlage, insbesondere einer Tankentlüftungsanlage, eines Fahrzeugs, wobei man mittels einer Druckquelle einen Überdruck oder einen Unterdruck gegenüber dem Atmosphärendruck in die Tankanlage einbringt und den zeitlichen Verlauf wenigstens einer Betriebskenngröße der Druckquelle beim Einbringen des Überdrucks/Unterdrucks bis zum Erreichen eines ersten Zeitpunkts oder eines ersten Druckniveaus erfasst und mit einem im Falle einer dichten Tankanlage erwarteten zeitlichen Verlauf der Betriebskenngröße bis zu diesem Zeitpunkt oder bis zu diesem Druckniveau (erwarteter Diagnoseverlauf) vergleicht und auf eine Undichtigkeit schließt, wenn der erfasste zeitliche Verlauf um wenigstens einen vorgegebenen Wert von dem erwarteten Diagnoseverlauf abweicht, **dadurch gekennzeichnet, dass** man bei Feststellung einer Abweichung den Überdruck/Unterdruck in der Tankanlage weiter bis zum Erreichen eines zweiten Zeitpunkts oder zweiten Druckniveaus erhöht, die Betriebskenngröße der Druckquelle weiter erfasst und mit einem erwarteten weiteren zeitlichen Verlauf der Betriebskenngröße im Fall einer dichten Tankanlage (weiterer Diagnoseverlauf) vergleicht und eine Fehlermeldung nur dann ausgibt, wenn auch der erfasste zeitliche Verlauf bei Einbringen des weiteren Überdrucks/Unterdrucks von dem weiteren erwarteten Diagnoseverlauf abweicht.

2. Verfahren nach Anspruch 1, **dadurch gekennzeichnet, dass** man als Betriebskenngröße den Pumpenstrom einer Überdruckpumpe/Unterdruckpumpe erfasst.

3. Verfahren nach Anspruch 2, **dadurch gekennzeichnet, dass** man den Pumpenstrom nach Ablauf der vorgegebenen Zeitintervalle mit erwarteten Stromwerten bei einer dichten Tankanlage vergleicht und eine Fehlermeldung nur dann ausgibt, wenn der erfasste Pumpenstrom sowohl nach Ablauf des ersten Zeitintervalls von einem ersten erwarteten Stromwert bei einer dichten Tankanlage als auch bei Ablauf des zweiten zeitintervalls von einem zweiten erwarteten Stromwert bei einer dichten Tankanlage abweicht.

## Claims

1. Method for testing a tank system, in particular a tank venting system, of a vehicle for leaks, an excess pressure or a low pressure in comparison with the atmospheric pressure being applied to the tank system by means of a pressure source and the variation over time of at least one operational characteristic variable of the pressure source being registered when the excess pressure/low pressure is applied until a first point in time or a first pressure level is reached, and being compared with a variation over time of the operational characteristic variable which is expected in the case of a leakproof tank system, to this point in time or up to this pressure level (expected diagnostics profile) and the conclusion being drawn that leaks are present if the registered variation over time differs from the expected diagnostics profile by at least a predefined value, **characterized in that** when a difference is detected, the excess pressure/low pressure in the tank system is increased further until a second point in time or second pressure level is reached, the operational characteristic variable of the pressure source is registered again and compared with an expected, further variation over time of the operational characteristic variable in the case or a leakproof tank system (further diagnostics profile), and a fault message is output only if the registered variation over time also differs from the further, expected diagnostics profile when the further excess pressure/low pressure is applied.

2. Method according to Claim 1, **characterized in that** the pump flow of an excess pressure pump/low pressure pump is registered as the operational characteristic variable.

3. Method according to Claim 2, **characterized in that** the pump flow is compared, after the predefined time intervals have expired, with expected flow values in the case of a leakproof tank system, and a fault message is output only if the registered pump flow both differs from a first expected flow value after the first time interval has expired in the case of a leakproof tank system and from a second expected flow value when the second time interval expires in the case of a leakproof tank system.

## Revendications

1. Procédé pour vérifier l'étanchéité d'une installation de réservoir d'un véhicule, en particulier d'une installation destinée à ventiler un réservoir, selon lequel on établit dans l'installation de réservoir une surpression ou une dépression par rapport à la pression atmosphérique à l'aide d'une source de pression, on enregistre la variation temporelle d'au moins un paramètre de fonctionnement de la source de pression lorsqu'on établit la surpression/la dépression jusqu'à ce qu'on atteigne un premier instant ou un premier niveau de pression, et on compare à une variation temporelle attendue du paramètre de fonctionnement dans le cas d'une installation de réservoir étanche jusqu'à cet instant ou jusqu'à ce niveau de pression (courbe attendue de diagnostic) et on conclut à un manque d'étanchéité lorsque la variation temporelle enregistrée s'écarte d'au moins une valeur prédéterminée de la variation de diagnostic attendue,
**caractérisé en ce que**
lorsqu'on détermine un écart, on continue d'augmenter la surpression/la dépression dans l'installation de réservoir jusqu'à ce qu'on atteigne un deuxième instant ou un deuxième niveau de pression, on continue d'enregistrer le paramètre de fonctionnement de la source de pression et on compare à une autre variation attendue dans le temps du paramètre de fonctionnement dans le cas d'une installation de réservoir étanche (autre courbe de diagnostic attendue) et on n'émet de message d'erreur que lorsque la variation temporelle enregistrée s'écarte aussi de l'autre variation attendue de diagnostic lorsqu'on établit l'autre surpression/dépression.

2. Procédé selon la revendication 1,
**caractérisé en ce que**
comme paramètre de fonctionnement on enregistre le courant d'une pompe de surpression/dépression.

3. Procédé selon la revendication 2,
**caractérisé en ce que**
après que les intervalles de temps prédéterminés se sont écoulés, on compare le courant de la pompe aux valeurs de courant escomptées dans le cas d'une installation de réservoir étanche et on n'émet de message d'erreur que lorsque le courant de la pompe s'écarte soit d'une première valeur de courant escomptée dans le cas d'une installation de réservoir étanche après que le premier intervalle de temps s'est écoulé, soit d'une deuxième valeur de courant escomptée dans le cas d'une installation de réservoir étanche après que le deuxième intervalle de temps s'est écoulé.
